# EUROPEAN PATENT SPECIFICATION

(11) **EP 2 513 449 B1**
(45) Date of publication and mention of the grant of the patent: **26.02.2014**
(21) Application number: 10801590.0
(22) Date of filing: 14.12.2010
(51) Int. Cl.: F02B 29/04

(54) **METHOD OF OPERATING A PISTON ENGINE**
VERFAHREN ZUM BETRIEB EINES KOLBENMOTORS
PROCEDE DE COMMANDE D'UN MOTEUR A PISTONS

(30) Priority: 17.12.2009 FI 20096344
(43) Date of publication of application: 24.10.2012
(73) Proprietor: Wärtsilä Finland Oy, 65380 Vaasa (FI)
(72) Inventor: RAUNIO, Tomi, FI-61500 Isokyrö (FI)
(74) Representative: Berggren Oy Ab
(86) International application number: PCT/FI2010/051024
(87) International publication number: WO 2011/073512

(56) References cited:
- WO-A1-2005/111392
- GB-A- 2 055 963
- US-A1- 2002 011 242
- US-A1- 2004 244 782

## Description

The invention relates to a method of operating a turbocharged piston engine.

In turbocharged piston engines the pressure of the charge air is increased at least in one stage by a compressor. After the compressor, the pressurised charge air is typically cooled by a charge air cooler. If charge air pressure, temperature and humidity are at a certain level, water vapour in charge air condenses into water. Condense (water droplets, mist) may cause corrosion and erosion to the engine components, e.g. turbocharger compressor impeller (in 2-stage turbocharging), charge air receiver, inlet channels and inlet valves. The amount of condense can be high especially on high pressure side of the charge air system.

The object of the present invention is to reduce the amount of condense in the charge air system of a turbocharged piston engine.

The object of the invention is met as is disclosed in claim 1. The turbocharged piston engine comprises a low-temperature cooling circuit for low-temperature cooling liquid, a high-temperature cooling circuit for high-temperature cooling liquid and a charge air cooler connected to the low-temperature cooling circuit. According to the invention the charge air of the engine is pressurised at least in one stage, pressurised charge air is cooled by a charge air cooler into which low-temperature cooling liquid is fed, a dew point of the pressurised charge air downstream of the charge air cooler is defined and the temperature of the charge air leaving the charge air cooler is adjusted to be higher than the dew point by controlling the temperature of the low-temperature cooling liquid fed into the charge air cooler. The temperature of the low-temperature cooling liquid is controlled by adding high-temperature cooling liquid thereto.

An engine comprising a low-temperature and a high temperature cooling circuits is disclosed in document WO 2005/111392 A1.

In one embodiment of the invention the charge air is pressurised at least in two stages. In one stage charge air is pressurised by a low-pressure compressor and in the last stage by a high-pressure compressor. The charge air cooler is the last high-pressure charge air cooler arranged downstream of the high-pressure compressor.

Significant benefits can be achieved by means of the invention. The amount of condense in the charge air system can be reduced, which in turn reduces corrosion and erosion damages of the engine components.

In the following the invention will be described with the reference to the accompanying drawing which is a schematic view of the piston engine turbocharged in two stages.

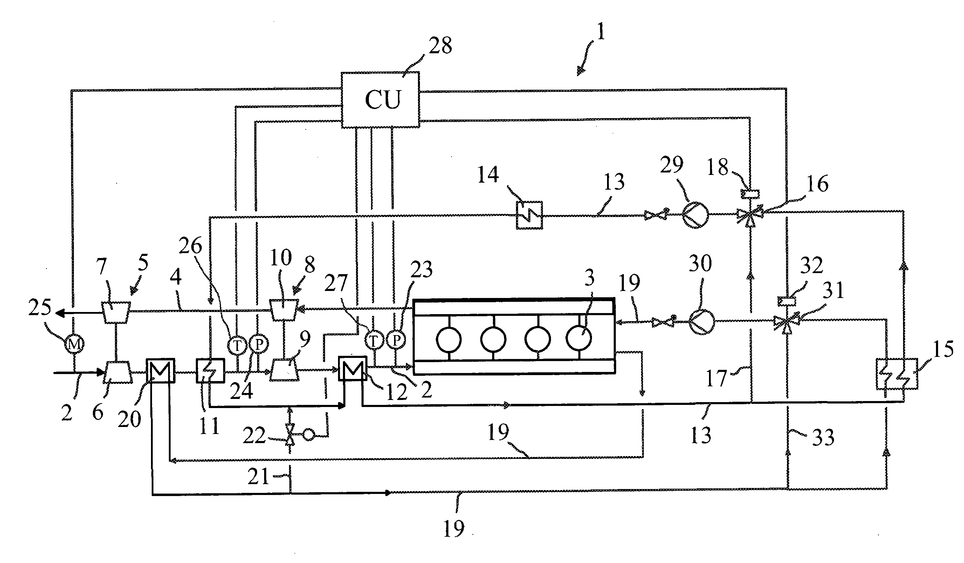

Figure 1 is a schematic view of the piston engine 1 that is turbocharged in two stages. The engine 1 is a large piston engine that is used, for example, as main and auxiliary engines in ships and in power plants. The engine 1 comprises an inlet channel 2 through which inlet air is fed into engine cylinders 3. The engine 1 comprises an exhaust channel 4 through which exhaust gas is discharged from the cylinders 3. Further, the engine 1 comprises a low-pressure (LP) turbocharger 5 provided with a low-pressure (LP) compressor 6 and a low-pressure (LP) turbine 7. The engine 1 comprises a high-pressure (HP) turbocharger 8 provided with a high-pressure (HP) compressor 9 and a high-pressure (HP) turbine 10. A low-pressure (LP) charge air cooler 11 is connected to the inlet channel 2 between the LP compressor 6 and the HP compressor 9. The LP charge air cooler 11 is arranged to cool the charge air pressurized by the LP compressor 6 before conducting it to the HP compressor 9. A high-pressure (HP) charge air cooler 12 is connected to the inlet channel 2 between the HP compressor 9 and engine cylinders 3. The HP charge air cooler 12 is arranged to cool the charge air pressurized by the HP compressor 9. A generator (not shown) can be connected to the engine 1.

The engine 1 can be provided with a further low-pressure (LP) charge air cooler 20 which is connected to the inlet channel 2 between the LP compressor 6 and the LP charge air cooler 11. Further, the engine 1 can be provided with a further high-pressure (HP) charge air cooler (not shown) which is connected to the inlet channel 2 between the HP compressor 9 and the HP charge air cooler 12.

The engine 1 comprises a low-temperature (LT) cooling circuit 13, in which low-temperature (LT) cooling liquid of the engine, e.g. water, is circulated. The LP charge air cooler 11, the HP charge air cooler 12 and a lubricating oil cooler 14 of the engine are connected to the LT cooling circuit 13. The lubricating oil cooler 14 is connected to the LT cooling circuit 13 upstream of the HP and LP charge air coolers 12, 11. The LP charge air cooler 11 is connected to the LT cooling circuit 13 upstream of the HP charge air cooler 12. The engine 1 comprises a cooler 15 by which LT cooling liquid is cooled. LT cooling liquid discharged from the HP charge air cooler 12 is fed into the cooler 15 and cooled by the cooler 15. From the cooler 15 LT cooling liquid is fed back to the LT cooling circuit 13 through a three-way valve 16. The LT cooling circuit 13 includes a return conduit 17 for mixing cooled LT cooling liquid discharged from the cooler 15 with LT cooling liquid warmed by the LP and HP charge air coolers 11, 12. The return conduit 17 is connected to the three-way valve 16. The amount of warm LT cooling liquid mixed with cooled LT cooling liquid can be adjusted by the three-way valve 16. Thus, the temperature of the LT cooling liquid fed into the LT cooling circuit 13 can be controlled. The three-way valve 16 is provided with a thermostat 18 by which the temperature of the LT cooling liquid fed into LT cooling circuit 13 can be set as desired.

Further, the engine 1 comprises a high-temperature (HT) cooling circuit 19, in which high-temperature (HT) cooling liquid of the engine, e.g. water, is circulated. The temperature level of cooling liquid in the HT cooling circuit 19 is higher than that in the LT cooling circuit 13. The HT cooling circuit 19 is arranged to cool the engine block. The engine block comprises cooling channels for the HT cooling liquid. The further LP charge air cooler 20 and the further HP charge air cooler are connected to HT cooling circuit 19. HT cooling liquid is cooled by the cooler 15. Alternatively, the HT cooling liquid can be cooled by a separate cooler.

The HT cooling circuit 19 includes a HT return conduit 33 for mixing cooled HT cooling liquid discharged from the cooler 15 with warm HT cooling liquid. The HT return conduit 33 is connected to a HT three-way valve 16. The amount of warm HT cooling liquid mixed with cooled HT cooling liquid can be adjusted by the HT three-way valve 33. Thus, the temperature of the HT cooling liquid fed into the HT cooling circuit 19 can be controlled. The HT three-way valve 33 is provided with a thermostat 34 by which the temperature of the HT cooling liquid fed into HT cooling circuit 19 can be set as desired.

The LT cooling circuit 13 is in flow connection with the HT cooling circuit 19 through a connecting conduit 21. The connecting conduit 21 is provided with a control means, e.g. a control valve 22, by which the flow of the HT cooling liquid through the connecting conduit 21 can be adjusted.

The inlet channel 2 is provided with a pressure sensor 23 for measuring the pressure of the charge air. The pressure sensor 23 is arranged downstream of the HP charge air cooler 12 in the flow direction of charge air. Additionally, the inlet channel 2 can be provided with a further pressure sensor 24 for measuring the pressure of the charge air. The further pressure sensor 24 is arranged downstream of the LP charge air cooler 11 but upstream of the HP compressor 9. The engine 1 is provided with a humidity sensor 25 for measuring relative humidity of the ambient air or charge air upstream of the LP compressor 6. The humidity sensor 25 can be provided before the LP compressor 6 in the flow direction of the charge air. The inlet channel 2 is provided with a temperature sensor 27 for measuring the charge air temperature downstream of HP charge air cooler 12 in the flow direction of the charge air. Additionally, the inlet channel 2 can be provided with a further temperature sensor 26 for measuring the temperature of the charge air after the LP charge air cooler 11 but before the HP compressor 9 in the flow direction of the charge air.

The engine 1 comprises a control unit 28 into which measurement signals from charge air humidity sensor 25, pressure sensors 23, 24 and temperature sensors 26, 27 are transmitted. The control unit 28 defines dew points of the charge air on the basis of the measurement signals. The dew point is the temperature at which water vapour in the air starts to condense under the prevailing conditions (pressure, humidity). The dew point of the charge air is defined at a location downstream of the last charge air cooler i.e. the HP-charge air cooler 12 in the flow direction of the charge air. Additionally, the dew point of the charge air is defined at a location downstream of the LP charge air cooler 11 but upstream of the HP compressor 9 in the flow direction of the charge air. The control unit 28 is arranged to operate the control valve 22 so that the temperature of the charge air leaving the HP-charge air cooler 12 is higher than the dew point of the charge air downstream of the HP-charge air cooler 12. This is accomplished by controlling the temperature of the LT cooling liquid fed to the HP charge air cooler 12. Additionally, the control unit 28 is arranged to operate the three-way valve 16 so that the temperature of the charge air leaving the LP-charge air cooler 11 is higher than the dew point of the charge air downstream of the LP-charge air cooler 11 but upstream of the HP-compressor 9. This is accomplished by controlling the temperature of the LT cooling liquid fed to LP charge air cooler 11.

When the engine 1 is running, charge air is conducted to the LP compressor 6, by which its pressure is raised. The humidity of the charge air is measured 25 before the LP compressor 6 in the flow direction the charge air. From the LP compressor 6, the LP charge air is conducted to the further LP charge air cooler 20 and cooled by the cooler 20. HT cooling liquid is fed to the further LP charge air cooler 20. Thereafter, the charge air is conducted to the LP charge air cooler 11 and cooled by the cooler 11. LT cooling liquid is fed to the LP charge air cooler 11.

The charge air is conducted from the LP charge air cooler 11 to the HP compressor 9 by which the pressure of the charge air is raised further. Thereafter, the HP charge air is conducted to the HP charge air cooler 12 and cooled by the cooler 12. LT cooling liquid is fed to the HP charge air cooler 12. From the HP charge air cooler 12 charge air is conducted to the cylinders 3 to be used as combustion air. Exhaust gas is discharged from the cylinders 2 and led through the HP turbine 10 and then through the LP turbine 7. The HP turbine 10 drives the HP compressor 9 and the LP turbine 7 drives the LP compressor 6.

LT cooling liquid is circulated in the LT cooling circuit 13. The temperature of the LT cooling liquid is adjusted by mixing cooled LT cooling liquid with warm LT cooling liquid. Thereafter, LT cooling liquid is fed to the lubricating oil cooler 14 in which the temperature of the LT cooling liquid increases. From the lubricating oil cooler 14 LT cooling liquid is fed into the LP charge air cooler 11. From the LP charge air cooler 11 cooling liquid is fed into the HP charge air cooler 12. The temperature of the LT cooling liquid is adjusted by adding HT cooling liquid to LT cooling liquid before the HP charge air cooler 12. From the HP charge air cooler 12, part of the LT cooling liquid is fed to the cooler 15 and part through the return conduit 17 to the three-way valve 16 and mixed with cooled LT cooling liquid discharged from the cooler 15.

HT cooling liquid is circulated in the HT cooling circuit 19. The temperature of the HT cooling liquid is adjusted by mixing cooled HT cooling liquid with warm HT cooling liquid. Thereafter, HT cooling liquid is circulated through the cooling channels of the engine block. From the engine block the HT cooling liquid is fed to the further LP charge air cooler 20. If the engine 1 comprises the further HP charge air cooler, the HT cooling liquid is fed into said charge air cooler after the further LP charge air cooler. Thereafter, part of the HT cooling liquid is fed to cooler 15 and part through the HT return conduit 33 to the HT three-way valve 31 and mixed with cooled HT cooling liquid discharged from the cooler 15.

To prevent water vapour in the charge air to condense into water, the temperature of the charge air leaving the last charge air cooler in the charge air flow direction i.e. the HP charge air cooler 12 is adjusted to be higher than the dew point of charge air downstream of said charge air cooler 12. First, the dew point of the charge air downstream of the HP charge air cooler 12 is defined on the basis of charge air humidity 25 and pressure 23 measurements. The temperature of the charge air leaving the HP charge air cooler 12 is adjusted by controlling the temperature of LT cooling liquid fed into the HP charge air cooler 12.

The temperature of the LT cooling liquid is controlled by adding HT cooling liquid thereto.

The dew point of the charge air between the LP charge air cooler 11 and the HP turbocharger 9 can be defined on the basis of the humidity 25 and pressure 24 measurements. The temperature of the charge air leaving the LP charge air cooler 11 is adjusted to be higher than the dew point of the charge air between the LP charge air cooler 11 and the HP-compressor 9 by controlling the temperature of the LT cooling liquid fed into the LT charge air cooler 11. The temperature of the LT cooling liquid is controlled by mixing cooled LT cooling liquid with LT cooling liquid warmed by the LP charge air cooler 11 and HP charge air cooler 12.

The invention may have embodiments different of those described above.

The engine can be provided with two parallel LP turbochargers 5 and two parallel HP turbochargers 8. In that case, the engine 1 comprises a separate LP charge air cooler 11 for each LP compressor 6 and a separate HP charge air cooler 12 for each HP compressor 9. Correspondingly, the further LP charge air coolers 20 are arranged parallel to each other. Otherwise this embodiment corresponds to that of the drawing.

The charge air may be pressurised in one-stage only. In that case, the engine 1 is provided with one turbocharger only or two parallel turbochargers, and correspondingly with one charge air cooler or two parallel charge air coolers arranged downstream of the turbocharger(s).

The charge air can be pressurised in three or more stages.

In all embodiments, the temperature of the charge air leaving the last charge air cooler in the flow direction of the charge air is adjusted to be higher than the charge air dew point after said charge air cooler by controlling temperature of the low-temperature cooling liquid fed into said charge air cooler. The temperature of the low-temperature cooling liquid is controlled by adding high-temperature cooling liquid thereto.

## Claims

1. Method of operating a turbocharged piston engine (1), which comprises a low-temperature cooling circuit (13) for low-temperature cooling liquid, a high-temperature cooling circuit (19) for high-temperature cooling liquid, and a charge air cooler (12) connected to the low-temperature cooling circuit (13), in which method
- charge air is pressurised at least in one stage,
- the pressurised charge air is cooled by the charge air cooler (12) into which low-temperature cooling liquid is fed, **characterized in that**
- a dew point of the pressurised charge air downstream of the charge air cooler (12) is defined, and
- temperature of the charge air leaving the charge air cooler (12) is adjusted to be higher than the dew point by controlling temperature of the low-temperature cooling liquid fed into the charge air cooler (12), and
**in that** the temperature of the low-temperature cooling liquid is controlled by adding high-temperature cooling liquid thereto.

2. Method according to claim 1, **characterised in that** the charge air cooler (12) is the last charge air cooler in the flow direction of the charge air.

3. Method according to claim 1 or 2, **characterised in that** the charge air is pressurised at least in two stages, in one stage by a low-pressure compressor (6) and in the last stage by a high-pressure compressor (9), and that the charge air cooler is a last high-pressure charge air cooler (12) arranged downstream of the high-pressure compressor (9).

4. Method according to claim 3, **characterised in that** the charge air pressurised by the low-pressure compressor (6) is cooled by a low-pressure charge air cooler (11) into which low-temperature cooling liquid is fed.

5. Method according to claim 4, **characterised in that** a dew point of the charge air at a location downstream of the low-pressure charge air cooler (11) is defined, and that the temperature of the charge air leaving the low-pressure charge air cooler (11) is adjusted to be higher than the dew point by controlling the temperature of the low-temperature cooling liquid fed into the low-pressure charge air cooler (11).

6. Method according to claim 5, **characterised in that** the temperature of the low temperature cooling liquid fed into the low-pressure charge air cooler (11) is controlled by mixing cooled low-temperature cooling liquid with low-temperature cooling liquid warmed by the low-pressure charge air cooler (11) and the high-pressure charge air cooler (12).

7. Method according to claim 5 or 6, **characterised in that** a lubricating oil cooler (14) is connected to the low-temperature cooling circuit (13) upstream of the low-pressure charge air cooler (11).

8. Method according to any of claims 4-7, **characterised in that** the low-pressure charge air cooler (11) is connected to the low-temperature cooling circuit (13) upstream of the high-pressure charge air cooler (12).

9. Method according to any of the preceding claims, **characterised in that** the charge air pressure (23) downstream of the charge air cooler (12) and the charge air humidity (25) are measured, and the dew point of the charge air is defined on the basis of the measurements.

10. Method according to any of the preceding claims, **characterised in that** an engine block of the piston engine (1) is cooled by the high temperature cooling liquid.

11. Method according to claim 10, **characterised in that** the engine comprises a further low pressure charge air cooler (20) which is connected to the high temperature cooling circuit (19) downstream of the engine block.

## Patentansprüche

1. Verfahren zum Betrieb eines abgasturboaufgeladenen Kolbenmotors (1), der einen Niedertemperatur-Kühlkreis (13) für Niedertemperatur-Kühlflüssigkeit, einen Hochtemperatur-Kühlkreis (19) für Hochtemperatur-Kühlflüssigkeit und einen mit dem Niedertemperatur-Kühlkreis (13) verbundenen Ladeluftkühler (12) umfasst, wobei bei dem Verfahren
- Ladeluft wenigstens in einer Stufe mit Druck beaufschlagt wird,
- die mit Druck beaufschlagte Ladeluft durch den Ladeluftkühler (12), in den Niedertemperatur-Kühlflüssigkeit geführt wird, gekühlt wird, **dadurch gekennzeichnet, dass**
- ein Taupunkt der mit Druck beaufschlagten Ladeluft stromabwärts von dem Ladeluftkühler (12) definiert wird, und
- die Temperatur der Ladeluft, welche den Ladeluftkühler (12) verlässt, durch Steuern der in den Ladeluftkühler (12) geführten Niedertemperatur-Kühlflüssigkeit so reguliert wird, dass sie höher als der Taupunkt ist, und
dass die Temperatur der Niedertemperatur-Kühlflüssigkeit durch Hinzufügen von Hochtemperatur-Kühlflüssigkeit gesteuert wird.

2. Verfahren nach Anspruch 1, **dadurch gekennzeichnet, dass** der Ladeluftkühler (12) der letzte Ladeluftkühler in der Strömungsrichtung der Ladeluft ist.

3. Verfahren nach Anspruch 1 oder 2, **dadurch gekennzeichnet, dass** die Ladeluft in wenigstens zwei Stufen - in einer Stufe durch einen Niederdruck-Kompressor (6) und in der letzten Stufe durch einen Hochdruck-Kompressor (9) - mit Druck beaufschlagt wird, und dass der Ladeluftkühler ein letzter Ladeluftkühler (12) ist, der stromabwärts von dem Hochdruck-Kompressor (9) angeordnet ist.

4. Verfahren nach Anspruch 3, **dadurch gekennzeichnet, dass** die durch den Niederdruck-Kompressor (6) mit Druck beaufschlagte Ladeluft durch einen Niederdruck-Ladeluftkühler (11), in den Niedertemperatur-Kühlflüssigkeit geführt wird, gekühlt wird.

5. Verfahren nach Anspruch 4, **dadurch gekennzeichnet, dass** ein Taupunkt der Ladeluft an einer Stelle stromabwärts von dem Niederdruck-Ladeluftkühler (11) definiert wird, und dass die Temperatur der Ladeluft, die den Niederdruck-Ladeluftkühler (11) verlässt, durch Steuern der Temperatur der in den Niederdruck-Ladeluftkühler (11) geführten Niedertemperatur-Kühlflüssigkeit so reguliert wird, dass sie höher als der Taupunkt ist.

6. Verfahren nach Anspruch 5, **dadurch gekennzeichnet, dass** die Temperatur der in den Niederdruck-Ladeluftkühler (11) geführten Niedertemperatur-Kühlflüssigkeit durch Mischen gekühlter Niedertemperatur-Kühlflüssigkeit mit Niedertemperatur-Kühlflüssigkeit, die durch den Niederdruck-Ladeluftkühler (11) und den Hochdruck-Ladeluftkühler (12) erwärmt wurde, gesteuert wird.

7. Verfahren nach Anspruch 5 oder 6, **dadurch gekennzeichnet, dass** ein Schmierölkühler (14) stromaufwärts von dem Niederdruck-Ladeluftkühler (11) mit dem Niedertemperatur-Kühlkreis (13) verbunden ist.

8. Verfahren nach einem der Ansprüche 4 bis 7, **dadurch gekennzeichnet, dass** der Niederdruck-Ladeluftkühler (11) stromaufwärts von dem Hochdruck-Ladeluftkühler (12) mit dem Niedertemperatur-Kühlkreis (13) verbunden ist.

9. Verfahren nach einem der vorhergehenden Ansprüche, **dadurch gekennzeichnet, dass** der Ladeluftdruck (23) stromabwärts von dem Ladeluftkühler (12) und die Ladeluftfeuchtigkeit (25) gemessen werden und der Taupunkt der Ladeluft auf Basis der Messungen definiert wird.

10. Verfahren nach einem der vorhergehenden Ansprüche, **dadurch gekennzeichnet, dass** ein Motorblock des Kolbenmotors (1) durch die Hochtemperatur-Kühlflüssigkeit gekühlt wird.

11. Verfahren nach Anspruch 10, **dadurch gekennzeichnet, dass** der Motor einen weiteren Niederdruck-Ladeluftkühler (20) umfasst, der stromabwärts von dem Motorblock mit dem Hochtemperatur-Kühlkreis (19) verbunden ist.

## Revendications

1. Procédé de fonctionnement d'un moteur à pistons turbochargé (1) qui comprend un circuit de refroidissement basse température (13) pour du liquide de refroidissement basse température, un circuit de refroidissement haute température (19) pour du liquide de refroidissement haute température, et un refroidisseur d'air de suralimentation (12) raccordé au circuit de refroidissement basse température (13), dans lequel procédé
- l'air de suralimentation est pressurisé au moins dans une étape,
- l'air de suralimentation pressurisé est refroidi par le refroidisseur d'air de suralimentation (12) dans lequel le liquide de refroidissement basse température est alimenté,
**caractérisé en ce**
- **qu'**un point de rosée de l'air de suralimentation pressurisé en aval du refroidisseur d'air de suralimentation (12) est défini, et
- la température de l'air de suralimentation sortant du refroidisseur d'air de suralimentation (12) est ajustée pour être supérieure au point de rosée en contrôlant la température du liquide de refroidissement basse température alimenté dans le refroidisseur d'air de suralimentation (12), et
en ce que la température du liquide de refroidissement basse température est contrôlée en ajoutant du liquide de refroidissement haute température dedans.

2. Procédé selon la revendication 1, **caractérisé en ce que** le refroidisseur d'air de suralimentation (12) est le dernier refroidisseur d'air de suralimentation dans la direction d'écoulement de l'air de suralimentation.

3. Procédé selon la revendication 1 ou 2, **caractérisé en ce que** l'air de suralimentation est pressurisé au moins en deux étapes, dans une étape par un compresseur basse pression (6) et dans la dernière étape par un compresseur haute pression (9), et **en ce que** le refroidisseur d'air de suralimentation est un dernier refroidisseur d'air de suralimentation haute pression (12) agencé en aval du compresseur haute pression (9).

4. Procédé selon la revendication 3, **caractérisé en ce que** l'air de suralimentation pressurisé par le compresseur basse pression (6) est refroidi par un refroidisseur d'air de suralimentation basse pression (11) dans lequel du liquide de refroidissement basse température est alimenté.

5. Procédé selon la revendication 4, **caractérisé en ce qu'**un point de rosée de l'air de suralimentation à un emplacement en aval du refroidisseur d'air de suralimentation basse pression (11) est défini et que la température de l'air de suralimentation sortant du refroidisseur d'air de suralimentation basse pression (11) est ajustée pour être supérieure au point de rosée en contrôlant la température du liquide de refroidissement basse température alimenté dans le refroidisseur d'air de suralimentation basse pression (11).

6. Procédé selon la revendication 5, **caractérisé en ce que** la température du liquide de refroidissement basse température alimenté dans le refroidisseur d'air de suralimentation basse pression (11) est contrôlée en mélangeant du liquide de refroidissement basse température refroidi avec du liquide de refroidissement basse température réchauffé par le refroidisseur d'air de suralimentation basse pression (11) et le refroidisseur d'air de suralimentation haute pression (12).

7. Procédé selon la revendication 5 ou 6, **caractérisé en ce qu'**un refroidisseur d'huile lubrifiante (14) est relié au circuit de refroidissement basse température (13) en amont du refroidisseur d'air de suralimentation basse pression (11).

8. Procédé selon l'une quelconque des revendications 4 à 7, **caractérisé en ce que** le refroidisseur d'air de suralimentation basse pression (11) est relié au circuit de refroidissement basse température (13) en amont du refroidisseur d'air de suralimentation haute pression (12).

9. Procédé selon l'une quelconque des revendications précédentes, **caractérisé en ce que** la pression de l'air de suralimentation (23) en aval du refroidisseur d'air de suralimentation (12) et l'humidité de l'air de suralimentation (25) sont mesurées, et le point de rosée de l'air de suralimentation est défini sur la base de ces mesures.

10. Procédé selon l'une quelconque des revendications précédentes, **caractérisé en ce qu'**un bloc-moteur du moteur à pistons (1) est refroidi par le liquide de refroidissement haute température.

11. Procédé selon la revendication 10, **caractérisé en ce que** le moteur comprend un refroidisseur d'air de suralimentation basse pression (20) supplémentaire qui est relié au circuit de refroidissement haute température (19) en aval du bloc-moteur.
